**Europäisches Patentamt**

**European Patent Office**

**Office européen des brevets**

(19)

(11) Veröffentlichungsnummer : **0 133 513**
**B1**

(12) # EUROPÄISCHE PATENTSCHRIFT

(45) Veröffentlichungstag der Patentschrift :
30.09.87

(51) Int. Cl.⁴ : **B 25 J   9/00**

(21) Anmeldenummer : 84108759.6

(22) Anmeldetag : 24.07.84

(54) **Programmgesteuerter Industrieroboter, insbesondere Lackierroboter.**

(30) Priorität : 06.08.83 DE 8322699 U

(43) Veröffentlichungstag der Anmeldung :
27.02.85 Patentblatt 85/09

(45) Bekanntmachung des Hinweises auf die Patenterteilung : 30.09.87 Patentblatt 87/40

(84) Benannte Vertragsstaaten :
BE DE FR GB NL SE

(56) Entgegenhaltungen :
DE-A- 2 848 385

(73) Patentinhaber : **Behr Industrieanlagen GmbH & Co.**
**Talstrasse 14 Postfach 40**
**D-7121 Ingersheim 1 (DE)**

(72) Erfinder : **Schweiker, Werner**
**Fasanenweg 8**
**D-7121 Gemmrigheim (DE)**

(74) Vertreter : **Heusler, Wolfgang, Dipl.-Ing. et al**
**Von Bezold, Dieter, Dr. Schütz, Peter, Dipl.-Ing.**
**Heusler, Wolfgang, Dipl.-Ing. Maria-Theresia-Strasse**
**22 Postfach 860 260**
**D-8000 München 86 (DE)**

EP 0 133 513 B1

## Beschreibung

Die Erfindung betrifft einen programmgesteuerten Industrieroboter gemäß dem Oberbegriff des Anspruchs 1.

Bei den nach einem Bewegungsprogramm automatisch gesteuerten Handhabungsvorrichtungen, die allgemein als Industrieroboter bezeichnet werden, kann es erforderlich sein, an einem dreidimensional schwenkbaren und ggf. streckbaren Tragarm einen das Werkzeug haltenden Schwenkkopf vorzusehen, der seinerseits durch Stellmotoren um drei unter Winkeln von 45° zueinander stehende Achsen über jeweils 360° (oder mehr) drehbare Teile hat. Damit die Schwenkkopfteile schnell verdrehbar sind, werden sie mit geringer Masse und möglichst reibungsarm gelagert. Ihre Achsen sind daher relativ schwach und nur für sehr geringe Biegekräfte ausgelegt. Dies kann besonders dann der Fall sein, wenn zwischen Werkzeug und zu bearbeitendem Werkstück keine Berührung erfolgt und somit keine unvorhersehbaren Kräfte auftreten, wie es z. B. bei Bestrahlungseinrichtungen, Lackiereinrichtungen oder dgl. der Fall ist.

Die Gelenkachsen an den Unterteilungsstellen des gewöhnlich vertikal abknickbaren und an seiner Wurzel horizontal verschwenkbaren Tragarms sind hingegen schon wegen der größeren Massen und der Hebellänge der Armstücke mit wesentlich größeren Kräften belastbar.

Im Automobilbau, bei welchem derartige Handhabungsvorrichtungen als Lackierroboter Anwendung finden, der als Werkzeug am Schwenkkopf eine Lacksprühvorrichtung trägt, müssen vor dem Lackieren der Fahrzeugrohkarosserie deren Türen sowie Motor- und Kofferraumhauben geöffnet werden, damit ein einwandfreier Kantenumgriff erzielt wird. In bereits weitgehend automatisierten Lackierstationen werden dazu eigens vorgesehene, relativ einfache Handhabungsvorrichtungen verwendet, die mit einem Haken oder ggf. an den zu öffnenden Türen und Hauben angreifen und sie in die gewünschte Offenstellung bringen, in der sie während des nachfolgenden Lackiervorgangs durch weitere Mittel gehalten werden. Der beträchtliche maschinelle Aufwand für diese Hilfstätigkeit ist unerwünscht.

Aus der DE-OS 32 44 053 ist bereits ein zur automatischen Farbbeschichtung von Fahrzeugkarosserien dienender Roboter der eingangs genannten Art bekannt, dessen Greifglied ein Türgreifer zum Öffnen und Schließen der Fahrzeugtüren vor bzw. nach dem Lackiervorgang ist. Das horizontale Schwenken der Türen erfordert keine großen Kräfte. Da aber der Türgreifer des bekannten Roboters an einem auch zum Verdrehen der Lacksprühvorrichtung vorgesehenen Betätigungsteil angebracht ist, könnte er nicht zum Anheben der relativ schweren Fahrzeughauben verwendet werden, weil die Verdrehungsachse des Betätigungsteils durch das Haubengewicht beschädigt werden könnte. Hierfür sind also nach wie vor die oben erwähnten aufwendigen Hilfsroboter notwendig.

Der Erfindung liegt die Aufgabe zugrunde, einen Industrieroboter der eingangs genannten Art anzugeben, der neben seiner eigentlichen Funktion der Lackierung oder sonstigen Behandlung von Werkstücken in der Lage ist, selbsttätig und ohne wesentlichen mechanischen Zusatzaufwand auch relativ schwere Werkstückteile wie insbesondere die Hauben von Fahrzeugkarosserien anzuheben.

Diese Aufgabe wird durch den im Anspruch 1 gekennzeichneten Industrieroboter gelöst.

Mit dem Greifglied können nicht nur die Hauben von Fahrzeugkarosserien angehoben, sondern auch die Fahrzeugtüren geöffnet und geschlossen werden, so daß kein weiterer Haken in der bekannten Weise am Schwenkkopf selbst angebracht werden muß.

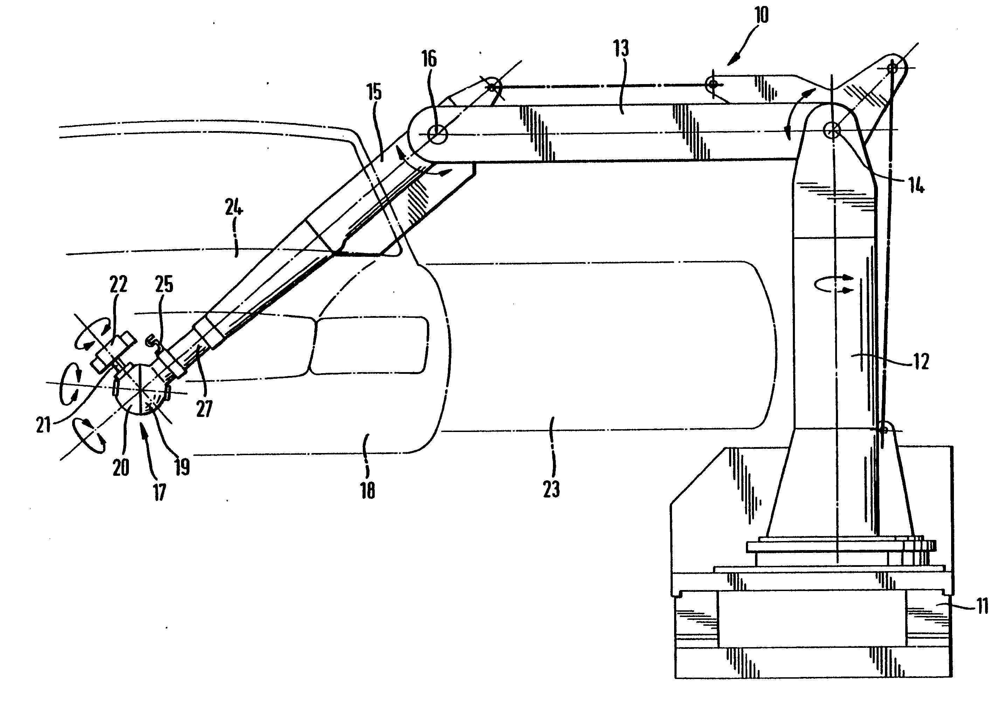

Die Erfindung wird nachfolgend an einem Ausführungsbeispiel anhand der Zeichnung, die einen Lackierroboter und eine angedeutete Fahrzeugkarosserie darstellt, näher erläutert. Sie ist jedoch nicht auf den Fall des Lackierens beschränkt, sondern kann auch für andere automatisierte Arbeitsvorgänge wie das Ausblasen oder Aussaugen von Innenräumen von Werkstücken, Bestrahlungsvorgänge oder auch Schweißvorgänge angewendet werden.

Der gesamte Industrieroboter ist in der Figur mit 10 bezeichnet. Er besteht aus einem Sockel 11, einem Ständer 12, der auf dem Sockel um seine Achse um einen bestimmten Winkel drehbar ist, einem am oberen Ende des Ständers 12 angelenkten Ausleger 13, der um eine horizontale Achse 14 durch ein (nicht gezeigtes) Stellglied zwischen Ständer und Ausleger verschwenkbar ist, einem am Vorderende des Auslegers 13 angelenkten Tragarm 15, der um eine horizontale Achse 16 durch ein wiederum nur andeutungsweise gezeigtes Stellglied um einen bestimmten Winkel verschwenkbar ist, und einem insgesamt mit 17 bezeichneten Schwenkkopf am freien Ende des Tragarms 15. Der Sockel 11 kann gegenüber seiner Standfläche parallel zu einer strichpunktiert angedeuteten, mittels einer nicht dargestellten Transportvorrichtung in Richtung senkrecht zur Zeichenebene bewegten Fahrzeugkarosserie 18 verfahrbar sein, um während des Bearbeitungsvorgangs der Karosseriebewegung über eine gewisse Strecke folgen zu können.

Der Schwenkkopf 17 weist, wie an sich bekannt, drei Teile auf, von denen der erste, mit dem Vorderende des Arms 15 um 360° drehbare Teil 19 einen zweiten Teil 20 trägt, der gegenüber dem ersten Teil 19 wiederum um 360° drehbar ist, während im zweiten Teil 20 als dritter Teil 21 eine Werkzeughalterwelle um 360° drehbar ist, auf der das Werkzeug — im vorliegenden Fall eine Lacksprühvorrichtung 22 — gehalten ist. Die die Teile 19, 20 und 21 miteinander verbindenden Achsen stehen jeweils unter Winkeln von 45° zueinander. Die Teile sind durch Stellmotoren angetrieben. Damit kann die Lacksprühvorrichtung 22 jede beliebige Richtung einnehmen.

Es versteht sich, daß dem dargestellten mechanischen Teil des Industrieroboters 10 eine programmierbare Steuereinrichtung zugeordnet ist, die in an sich bekannter Weise ausgebildet ist.

Um bei der in die Lackierstation hereinkommenden Karosserie 18 die dann geschlossenen Türen 23 und Hauben 24 in eine für das Lackieren benötigte Offenstellung zu bringen, ist am Vorderende des Tragarms 15 vor der Schnittstelle zum ersten Teil 19 des Schwenkkopfes 17 ein Haken 25 in einer für den Angriff an geeigneten Stellen der Türen 23 und Hauben 24 zweckmässigen Stellung und Richtung angebracht, und zwar so, daß er nicht innerhalb der Werkzeugwirkbahn — bei der beschriebenen Lackiervorrichtung im Sprühstrahl — liegt. Durch diese Anordnung des Hakens 25 wird einerseits die steuerbare Beweglichkeit von Ständer 12, Ausleger 13 und Tragarm 15 und gegebenenfalls Sockel 11 des Industrieroboters 10 genutzt. Andererseits wirken die bei den Öffnungsvorgängen auftretenden Kräfte lediglich an den relativ stabilen Gelenkwellen an den Achsen 14 und 16, nicht jedoch an den nur mit geringen Biegekräften belastbaren Achsen zwischen dem Tragarm 15 und dem Schwenkkopf 17 und zwischen den einzelnen Teilen des Schwenkkopfes.

Das vordere, um die Längsachse des Schwenkkopfes 17 drehbare Endteil 27 des Tragarms 15, an dessen vorderem Ende der Haken 25 darstellungsgemäß starr angebracht ist, ist vorzugsweise in dem Tragarm 15 teleskopartig verschiebbar gelagert. Ferner kann das Endteil 27 um seine Längsachse drehbar sein, damit unabhängig von dem Schwenkkopf 17 auch der Haken 25 um diese Achse gedreht werden kann.

**Patentansprüche**

1. Programmgesteuerter Industrieroboter zur Behandldung von Werkstücken, an denen vor der Behandlung zu bewegende Teile (23, 24) montiert sind, insbesondere Lackierroboter für die Farbbeschichtung von rohen Fahrzeugkarosserien, mit einem dreidimensional schwenkbaren Tragarm (12, 13, 15), mit einem am freien Ende des Tragarms angebrachten Schwenkkopf (17), der das Werkzeug, insbesondere eine Lacksprühvorrichtung (22), trägt und mit hoher Verstellgeschwindigkeit um eine Mehrzahl von Achsen drehbar ist, die mit wesentlich geringeren Kräften belastbar sind als die Schwenkachsen des Tragarms, und mit einem mit dem Tragarm bewegbaren Greifglied (25), das an einem der beweglichen Werkstückteile (23, 24) angreift, um es in eine Öffnungsstellung zu bewegen, dadurch gekennzeichnet, daß das Greifglied (25) zum Anheben des beweglichen Werkstückteils (23, 24) dient und derart an dem Tragarm (15) angebracht ist, daß die auf das Greifglied (25) wirkenden Kräfte keine der gering belastbaren Drehachsen des Schwenkkopfes (17) belasten.

2. Industrieroboter nach Anspruch 1, dadurch gekennzeichnet, daß das unmittelbar am Tragarm (15) angebrachte Greifglied (25) ein Haken zum Öffnen der Motor- oder Kofferraumhauben (24) von Fahrzeugkarosserien ist.

3. Industrieroboter nach Anspruch 1 oder 2, dadurch gekennzeichnet, daß das Greifglied (25) starr an einem Tragarm-Endteil (27) befestigt ist, um dessen Längsachse der Schwenkkopf (17) drehbar ist.

4. Industrieroboter nach Anspruch 3, dadurch gekennzeichnet, daß das Tragarm-Endteil (27) in dem Tragarm (15) teleskopartig verschiebbar gelagert ist.

5. Industrieroboter nach Anspruch 3 oder 4, dadurch gekennzeichnet, daß das Tragarm-Endteil (27) um seine Längsachse drehbar ist.

**Claims**

1. Program controlled industry robot for the treatment of work pieces, on which parts (23, 24) are mounted to be moved prior to the treatment, in particular lacquering robot for the color coating of blank automobile bodies, with a support arm (12, 13, 15) swivelable three dimensionally, with a swivel head (17) affixed at the free end of the support arm, said swivel head carrying the tool, in particular a lacquer spraying device (22), and being rotatable around a plurality of axes with high velocity of control, which axes can be loaded with considerably smaller forces than the swivel axes of the support arm, and with a gripping element (25) moveable with the support arm, said gripping element gripping one of the moveable parts (23, 24) of the work piece in order to move it into an open position characterized in that the gripping element (25) serves for the lifting of the moveable part (23, 24) of the work piece and is attached to the support arm (15) in such a manner that the forces acting on the gripping element (25) do not load any of the slightly loadable axes of rotation of the swivel head (17).

2. Industry robot as set forth in claim 1, characterized in that the gripping element (25) being attached directly on the support arm (15) is a hook for the opening of the motor or trunk lids (24) of automobile bodies.

3. Industry robot as set forth in claim 1 or 2, characterized in that the gripping element (25) is affixed riggedly on a support arm end part (27), said swivel head (17) being rotatable around the longitudinal axis of said end part.

4. Industry robot as set forth in claim 3, characterized in that the support arm end part (27) is supported telescopically slideably in the support arm (15).

5. Industry robot as set forth in claim 3 or 4, characterized in that the support arm end part (27) is rotatable around its longitudinal axis.

**Revendications**

1. Robot industriel commandé par un programme pour le traitement de pièces sur lesquelles sont montées des parties (23, 24) devant être déplacées avant le traitement, en particulier robot de peinture pour le revêtement d'une couche colorée sur des carrosseries brutes de véhicules automobiles, comportant un bras porteur (12, 13, 15) pouvant pivoter dans les trois dimensions, une tête orientable montée à l'extrémité libre du bras porteur, cette tête portant l'outil, en particulier un dispositif de pulvérisation de peinture, et pouvant tourner, avec une vitesse de réglage élevée, autour d'une pluralité d'axes qui sont soumis à des forces sensiblement plus faibles que les axes d'articulations du bras porteur, et un organe de préhension (25) mobile avec le bras porteur et qui peut s'agripper à l'une des parties mobiles (23, 24) de la pièce pour la déplacer dans une position d'ouverture, caractérisé en ce que l'organe de préhension (25) sert au soulèvement de la partie mobile (23, 24) de la pièce et est monté sur le bras porteur (15) de telle façon que les forces agissant sur l'organe de préhension (25) ne sollicitent pas les axes de rotation moins chargés de la tête orientable (17).

2. Robot industriel suivant la revendication 1 caractérisé en ce que l'organe de préhension (25) monté directement sur le bras porteur (15) est constitué par un crochet destiné à ouvrir les capots de moteur et de coffre (24) d'une carrosserie de véhicule automobile.

3. Robot industriel suivant l'une quelconque des revendications 1 ou 2 caractérisé en ce que l'organe de préhension (25) est fixé rigidement à une pièce d'extrémité (27) du bras porteur et autour de l'axe longitudinal de laquelle la tête orientable (17) peut tourner.

4. Robot industriel suivant la revendication 3 caractérisé en ce que la pièce d'extrémité (27) du bras porteur est montée coulissante d'une manière télescopique dans le bras porteur (15).

5. Robot industriel suivant l'une quelconque des revendications 3 ou 4 caractérisé en ce que la pièce d'extrémité (27) du bras porteur est montée à rotation autour de son axe longitudinal.

0 133 513